# FASCICULE DE BREVET EUROPEEN

(11) **EP 2 411 270 B1**
(45) Date de publication et mention de la délivrance du brevet: **17.12.2014**
(21) Numéro de dépôt: 10708250.5
(22) Date de dépôt: 23.02.2010
(51) Int. Cl.: B64C 11/06, F16C 35/073

(54) **HELICE NON CARENEE A PALES A CALAGE VARIABLE POUR UNE TURBOMACHINE**
DÜSENLOSER FAN FÜR TURBOMASCHINE MIT SCHAUFELN MIT EINSTELLBAREM WINKEL
UNDUCTED FAN FOR TURBOMACHINE HAVING ADJUSTABLE INCIDENCE BLADES

(30) Priorité: 23.03.2009 FR 0901344
(43) Date de publication de la demande: 01.02.2012
(73) Titulaire: Snecma, 75015 Paris (FR)
(72) Inventeur: BOURU, Michel, André, 77550 Moissy Cramayel (FR); JABLONSKI, Laurent, 77550 Moissy Cramayel (FR); JOLY, Philippe, 77550 Moissy Cramayel (FR); BOSTON, Eric, Jacques, 77550 Moissy Cramayel (FR)
(74) Mandataire: Ramey, Daniel
(86) Numéro de dépôt international: PCT/FR2010/000167
(87) Numéro de publication internationale: WO 2010/109085

(56) Documents cités:
- DE-U1- 9 206 149
- US-A- 2 248 590
- US-A- 5 051 693
- US-A- 5 263 898

## Description

La présente invention concerne une hélice à pales à calage variable pour une turbomachine du type à hélices non carénées (en anglais « open rotor » ou « unducted fan »).

Une turbomachine de ce type comprend deux hélices externes coaxiales et contrarotatives, respectivement amont et aval, qui sont chacune entraînées en rotation par une turbine de la turbomachine et qui s'étendent sensiblement radialement à l'extérieur de la nacelle de cette turbomachine.

Chaque hélice comprend un élément de rotor polygonal comportant des logements cylindriques sensiblement radiaux répartis autour de l'axe longitudinal de la turbomachine et dans lesquels sont montées des platines de support des pales de l'hélice. Chaque pale comprend par exemple un pied à section en queue d'aronde qui est engagé dans une rainure de forme complémentaire de la platine.

Dans la technique actuelle, chaque platine comprend un corps sensiblement cylindrique vissé dans une couronne cylindrique qui est centrée et guidée en rotation dans un logement de l'élément de rotor au moyen de butées à rouleaux.

Le document US 2 248 590 montre le detail du montage des aubes d'une hélice sur le noyau.

Les platines et les couronnes peuvent tourner dans les logements de l'élément de rotor et sont entraînées en rotation autour des axes des pales par des moyens appropriés de façon à régler le calage angulaire des pales, et à l'optimiser en fonction des conditions de fonctionnement de la turbomachine.

En fonctionnement, les pales de l'hélice sont soumises à des forces centrifuges très importantes pouvant atteindre 30 000 daN, ces forces étant transmises à l'élément de rotor par l'intermédiaire des platines, des couronnes et des butées à rouleaux et passant par les filets de vissage des platines dans les couronnes. Ces filets ne sont en général pas conçus pour transmettre de tels efforts et risquent de se détériorer rapidement, limitant ainsi la durée de vie de l'hélice.

L'invention a notamment pour but d'apporter une solution simple, efficace et économique à ce problème.

Elle a pour objet une hélice du type précité dans laquelle la transmission des efforts entre chaque platine de support de pale et sa couronne est assurée par des surfaces annulaires d'appui relativement importantes et non pas par des filets qui sont relativement fragiles.

Elle propose à cet effet un procédé de montage d'une hélice non carénée à pales à calage variable pour une turbomachine, selon la revendication 1.

Les pales de l'hélice sont montées à rotation autour de leurs axes dans des logements radiaux d'un élément annulaire de rotor et chaque pale étant portée par une platine à corps cylindrique qui est engagé depuis l'extérieur dans un logement radial de l'élément de rotor et qui est retenu par une couronne annulaire montée depuis l'intérieur dans le logement et appliquée sur un rebord interne du logement par l'intermédiaire d'un palier. La couronne est sectorisée et comprend une partie radialement interne montée par emboîtement des secteurs de couronne dans une gorge annulaire de la surface externe du corps de la platine.

Le corps de chaque platine de support de pale est retenu dans un logement de l'élément de rotor par une couronne sectorisée qui est emboîtée dans une gorge annulaire du corps de la platine et qui est appliquée sur un rebord interne du logement de l'élément de rotor par l'intermédiaire d'un palier, de sorte que les efforts centrifuges appliqués à la pale en fonctionnement soient repris par la partie de la couronne emboîtée dans la gorge de la platine et transmis par le palier à l'élément de rotor. Ceci permet d'augmenter de façon notable la durée de vie de l'hélice.

Selon la caractéristique préférentielle de l'invention, la couronne sectorisée est formée de deux, trois, ou quatre secteurs de couronne, voire plus, qui sont emboîtés sur le corps de la platine comme suit. Le corps de la platine est engagé dans le logement de l'élément de rotor depuis l'extérieur, par déplacement de la platine en translation le long de l'axe du logement. Chaque secteur de couronne est engagé dans le logement depuis l'intérieur, entre le corps de la platine et une surface cylindrique interne du logement, par translation le long de l'axe du logement, jusqu'à ce qu'il soit situé au niveau de la gorge annulaire du corps de la platine. Chaque secteur est ensuite déplacé en translation radiale (par rapport à l'axe du logement) de l'extérieur vers l'intérieur de façon à ce que sa partie interne s'emboîte dans la gorge externe du corps de la platine. La couronne est alors retenue en direction radiale sur la platine par appui des flancs de sa partie interne sur les parois latérales internes de la gorge de la platine. La partie interne précitée de la couronne peut être formée par un rebord annulaire interne.

La couronne peut comprendre deux secteurs qui ont chacun une étendue angulaire de 180° environ, ou trois secteurs qui ont chacun une étendue angulaire de 120° environ, ou quatre secteurs qui ont chacun une étendue angulaire de 90° environ.

La partie annulaire de la couronne est avantageusement engagée dans la gorge annulaire du corps de la platine avec un ajustement à très faible tolérance d'assemblage.

Les secteurs de couronne sont par ailleurs bloqués dans la gorge du corps de la platine par des moyens de verrouillage fixés sur le corps de la platine depuis l'intérieur du logement.

Dans un mode de réalisation de l'invention, la couronne comprend une surface externe tronconique s'élargissant vers l'extérieur et sur laquelle est appliquée une surface interne tronconique sensiblement complémentaire d'un anneau qui est engagé depuis l'intérieur dans le logement et qui est sollicité sur la couronne par un écrou vissé sur le corps de la platine. L'écrou maintient l'anneau en appui sur la surface tronconique de la couronne qui est ainsi poussée vers le fond de la gorge du corps de la platine. Cet écrou est utilisé uniquement pour assurer la mise en appui et le maintien en position de l'anneau, et n'est donc pas sollicité pour la transmission des efforts transmis par la pale en fonctionnement.

Une rondelle de blocage peut être intercalée entre l'anneau et l'écrou, cette rondelle comprenant des premiers moyens coopérant par liaison de formes avec des moyens complémentaires du corps de la platine, et des seconds moyens coopérant par liaison de formes avec des moyens complémentaires de l'écrou, pour immobiliser en rotation l'écrou vis-à-vis de la platine.

En variante, la couronne comprend une surface externe tronconique s'élargissant vers l'extérieur et sur laquelle est appliquée une surface interne tronconique sensiblement complémentaire d'un anneau qui comprend un filetage interne de vissage sur le corps de la platine.

Avantageusement, la couronne comprend un rebord cylindrique qui s'étend axialement vers l'intérieur par rapport à l'axe du logement et qui est appliqué sur une surface cylindrique externe du corps de la platine. La couronne a alors une forme sensiblement en L en section, dont une branche est formée par sa partie annulaire interne engagée dans la gorge de la platine et dont l'autre branche est formée par le rebord cylindrique en appui sur le corps de la platine. Dans le cas où les efforts centrifuges appliqués à la pale sont relativement importants, l'appui du rebord cylindrique interne de la couronne sur la surface externe du corps de la platine garantit le maintien de la partie interne de la couronne dans la gorge de la platine.

En position montée, la couronne est séparée d'une surface cylindrique interne du logement par un espace annulaire dont la dimension radiale, par rapport à l'axe du logement, est déterminée en fonction des diamètres interne et externe de la couronne et de l'étendue angulaire de ses secteurs, de façon à ce que la partie interne de la couronne puisse être désengagé de la gorge du corps de la platine par déplacement des secteurs de couronne dans des directions radiales vers l'extérieur par rapport à l'axe du logement. Plus les secteurs de couronne ont une étendue angulaire importante et plus la dimension radiale de cet espace annulaire est importante.

La platine est par ailleurs appliquée sur une face externe du logement de l'élément de rotor par l'intermédiaire d'un autre palier.

La présente invention concerne également une turbomachine, caractérisée en ce qu'elle comprend au moins une hélice telle que décrite ci-dessus.

L'invention sera mieux comprise et d'autres détails, caractéristiques et avantages de la présente invention apparaîtront plus clairement à la lecture de la description qui suit, faite à titre d'exemple non limitatif et en référence aux dessins annexés, dans lesquels :
- la figure 1 est une vue schématique en coupe axiale d'une turbomachine à hélices non carénées ;
- la figure 2 est une vue schématique partielle en coupe d'une hélice non carénée de la technique antérieure, et représente une platine de support de pale, sur le corps de laquelle est vissée une couronne centrée et guidée dans un logement d'un élément de rotor de cette hélice ;
- la figure 3 est une vue schématique en perspective d'un élément de rotor d'une hélice selon l'invention ;
- la figure 4 est une schématique partielle en perspective et avec arrachement partiel de l'élément de rotor de la figure 3, à plus grande échelle, et dans un logement duquel sont montées une platine de support de pale et une couronne selon l'invention, la couronne étant sectorisée et rapportée et fixée sur le corps de la platine ;
- la figure 5 est une vue schématique partielle en perspective éclatée et avec arrachement partiel de l'élément de rotor et de la couronne de la figure 4, la platine ayant été retirée pour plus de clarté ;
- la figure 6 est une vue correspondant à la figure 4 et représente une variante de réalisation de l'invention ; et
- la figure 7 est une vue correspondant à la figure 5 de la variante de réalisation de la figure 6.

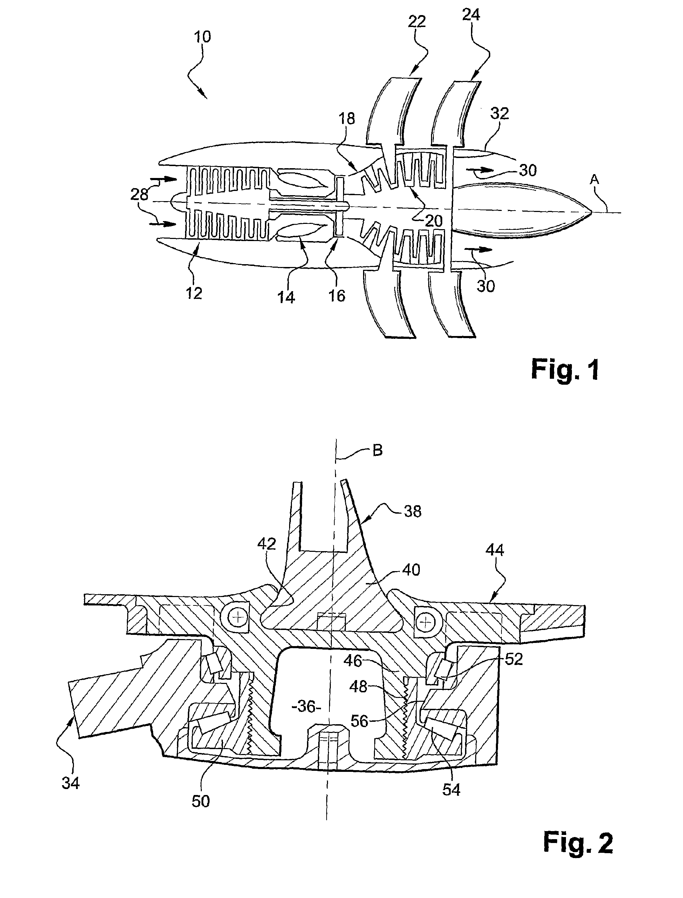

On se réfère d'abord à la figure 1 qui représente une turbomachine 10 à hélices non carénées (en anglais « open rotor » ou « unducted fan ») qui comporte d'amont en aval, dans le sens d'écoulement des gaz à l'intérieur de la turbomachine, un compresseur 12, une chambre annulaire de combustion 14, une turbine haute-pression 16, et deux turbines basse-pression 18, 20 qui sont contrarotatives, c'est-à-dire qu'elles tournent dans deux sens opposés autour de l'axe longitudinal A de la turbomachine.

Chacune de ces turbines aval 18, 20 est solidaire en rotation d'une hélice externe 22, 24 s'étendant radialement à l'extérieur de la nacelle 26 de la turbomachine, cette nacelle 26 étant sensiblement cylindrique et s'étendant le long de l'axe A autour du compresseur 12, de la chambre de combustion 14, et des turbines 16, 18 et 20.

Le flux d'air 28 qui pénètre dans la turbomachine est comprimé puis est mélangé à du carburant et brûlé dans la chambre de combustion 14, les gaz de combustion passant ensuite dans les turbines pour entraîner en rotation les hélices 22, 24 qui fournissent la majeure partie de la poussée générée par la turbomachine. Les gaz de combustion sortant des turbines sont expulsés à travers une tuyère 32 (flèches 30) pour augmenter la poussée.

Les hélices 22, 24 sont disposées coaxialement l'une derrière l'autre et comportent une pluralité de pales régulièrement réparties autour de l'axe A de la turbomachine. Ces pales s'étendent sensiblement radialement et sont du type à calage variable, c'est-à-dire qu'elles peuvent tourner autour de leurs axes de façon à optimiser leur position angulaire en fonction des conditions de fonctionnement de la turbomachine.

Dans un montage connu représenté en figure 2 et décrit dans le document US-A-5,263,898, chaque hélice comprend un élément de rotor formé par un anneau polygonal 34 qui s'étend autour de l'axe A et qui comporte une pluralité de logements 36 radiaux sensiblement cylindriques dans lesquels sont engagés des moyens de montage des pales 38 de l'hélice.

Chaque pale 38 comprend à son extrémité radialement interne un pied 40 à section du type en queue d'aronde, qui est engagé et retenu dans une rainure 42 d'une platine 44.

La platine 44 comprend un corps cylindrique 46 à filetage externe 48 pour son vissage depuis l'extérieur dans une couronne 50 qui est engagée dans le logement 36 de l'anneau polygonal 34 depuis l'intérieur, par rapport à l'axe longitudinal A de la turbomachine.

La platine 44 et la couronne 50 sont centrées et guidées en rotation dans le logement 36 au moyen de deux paliers à rouleaux 52, 54. Le logement 36 de l'anneau est divisé en deux parties, respectivement radialement interne et externe, par un rebord annulaire interne 56 de l'anneau. Un premier palier à rouleaux 52 est monté radialement à l'extérieur de ce rebord 56, entre ce rebord et la platine 44. Le second palier à rouleaux 54 est monté radialement à l'intérieur du rebord 56, entre ce rebord et la couronne 50. La platine 44 et la couronne 50 sont entraînées en rotation autour de l'axe radial B du logement 36 par des moyens appropriés qui ne sont pas représentés, pour faire tourner la pale 38 autour de cet axe et optimiser son calage angulaire.

En fonctionnement, les pales 38 sont soumises à des efforts centrifuges considérables (jusqu'à 30 000 daN) qui sont transmis des pales à l'anneau polygonal 34 par l'intermédiaire des filetages 48 des platines et des couronnes, qui en général ne sont pas conçus pour résister à de tels efforts. Il serait possible de surdimensionner ces filetages (pas de vis dit "pas d'artillerie") pour qu'ils résistent à ces efforts mais, mécaniquement, l'appui sur des filets (quelle que soit leur forme) pour la transmission de ces efforts n'est pas la meilleure solution pour assurer la longévité et la fiabilité demandées aux pièces aéronautiques.

L'invention apporte une solution à ce problème grâce à la sectorisation de la couronne et à l'emboîtement des secteurs de couronne dans une gorge annulaire externe du corps de la platine.

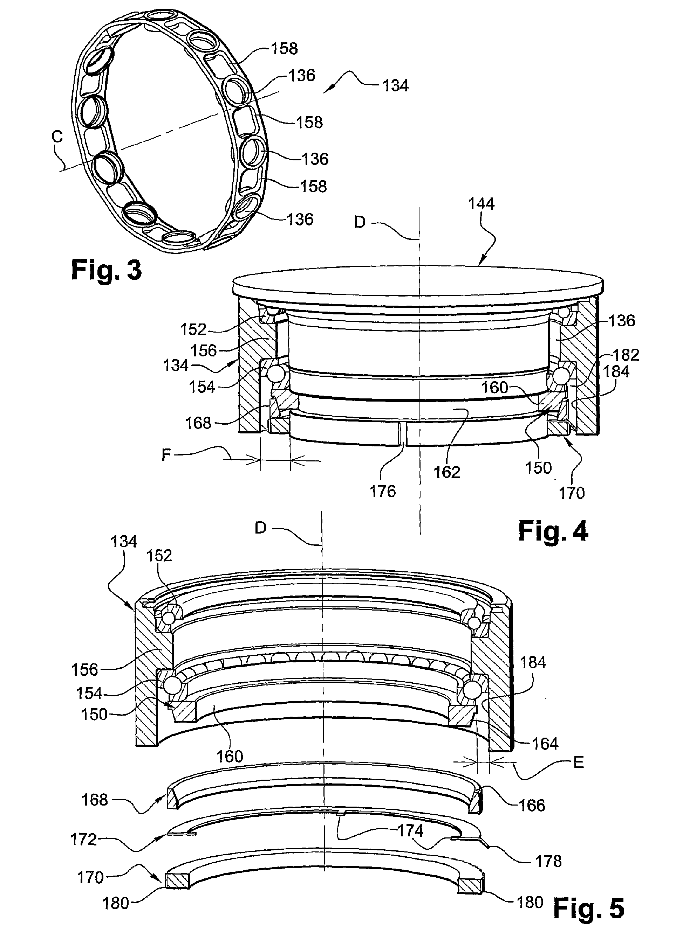

Les figures 3 à 5 représentent un mode de réalisation d'une hélice non carénée selon l'invention, les pales de cette hélice n'étant pas représentées pour plus de clarté et étant montées sur leurs moyens de support de la même façon que dans la technique connue.

L'anneau polygonal 134 de l'hélice selon l'invention est visible dans son entier en figure 3. Il comprend des logements cylindriques 136 sensiblement radiaux, par exemple au nombre de douze, dans chacun desquels sont destinées à être montées une platine et une couronne, comme cela sera expliqué plus en détail dans ce qui suit.

L'anneau polygonal 134 comprend une pluralité d'évidements 158 régulièrement répartis autour de l'axe C de l'anneau et formés dans la paroi cylindrique de l'anneau pour l'alléger. Chaque évidement 158 est situé entre deux logements radiaux 136 consécutifs.

Les figures 4 et 5 sont des vues partielles à plus grande échelle de cet anneau polygonal 134 dont une coupe axiale a été réalisée sensiblement au milieu d'un logement cylindrique 136 de l'anneau.

Comme dans la technique antérieure, le logement 136 de l'anneau est divisé en deux parties, respectivement radialement interne et externe, par un rebord annulaire interne 156 de l'anneau. Un premier palier 152 du type à billes dans l'exemple représenté est monté radialement à l'extérieur de ce rebord 156, entre ce rebord et la platine 144 pour la guider et la centrer en rotation. Le second palier 154 qui est également ici du type à billes est monté radialement à l'intérieur du rebord 156, entre ce rebord et la couronne 150 pour la guider et la centrer en rotation.

La platine 144 est appliquée sur la face latérale externe du rebord 156 par l'intermédiaire du palier 152 et la couronne 150 est appliquée sur la face latérale interne de ce rebord 156 par l'intermédiaire du palier 154.

Selon l'invention, la couronne 150 est sectorisée et comprend un rebord annulaire 160 qui s'étend radialement vers l'intérieur, par rapport à l'axe D du logement, et qui est engagé par emboîtement dans une gorge annulaire 162 débouchant vers l'extérieur du corps de la platine 144. Le montage des secteurs de couronne 150 dans la gorge de la platine sera expliqué dans le détail dans ce qui suit.

Dans l'exemple représenté, la couronne 150 comprend deux secteurs dont un est visible en figure 5.

La largeur ou dimension axiale (mesurée le long de l'axe D) du rebord 160 de la couronne 150 est égale ou supérieure à la largeur ou dimension axiale (mesurée le long du même axe) de la gorge 162 de la platine 144, de façon à ce que le rebord 160 soit engagé dans la gorge 162 avec ajustement à très faible tolérance d'assemblage, voire légèrement en force.

Le diamètre interne du rebord 160 de la couronne 150 est en outre sensiblement égal voire inférieur au diamètre interne de la gorge 162, de façon à ce que, en position montée représentée en figure 4, ce rebord 160 soit en appui par sa face radialement interne (par rapport à l'axe D) sur le fond de la gorge 162.

La couronne 150 comprend en outre à sa périphérie externe une surface externe tronconique 164 qui s'élargit radialement vers l'extérieur par rapport à l'axe C de l'anneau 134, et qui coopère avec une surface interne tronconique 166 de forme sensiblement complémentaire d'un anneau 168 monobloc qui est sollicité vers l'extérieur (par rapport à l'axe C) par un écrou 170 vissé sur le corps de la platine. L'anneau 168 est ainsi appliqué sur la couronne 150 par l'écrou 170. Le serrage de l'écrou 170 sur le corps de la platine 144 entraîne le glissement de la surface tronconique 166 de l'anneau 168 sur la surface tronconique 164 de la couronne 150 qui est alors sollicitée radialement vers l'intérieur par rapport à l'axe D du logement. Ceci permet de maintenir le rebord interne 160 de la couronne 150 en appui sur le fond de la gorge 162 de la platine 144.

Une rondelle de blocage 172 est intercalée entre l'anneau 168 et l'écrou 170 pour immobiliser en rotation cet écrou vis-à-vis de la platine 144.

Cette rondelle 172 comprend à sa périphérie interne des premières pattes 174 qui sont engagées dans des encoches 176 de forme complémentaire du corps de la platine, pour immobiliser en rotation la rondelle vis-à-vis de la platine. La rondelle 172 comprend en outre à sa périphérie externe des secondes pattes 178 qui sont destinées à être rabattues et engagées dans des encoches 180 de forme complémentaire de la périphérie externe de l'écrou 170, pour immobiliser en rotation la rondelle sur l'écrou 170.

La rondelle 172 est engagée dans le logement 136 par translation le long de l'axe D, depuis l'intérieur, et l'écrou 170 est vissé sur le corps de la platine 144 depuis l'intérieur.

Dans une variante non représentée, l'anneau et l'écrou précités peuvent être formés d'une seule pièce. L'anneau est alors vissé sur le corps de la platine et prend appui par sa surface interne tronconique sur la surface externe tronconique de la couronne.

La platine 144 et la couronne 150 sont montées dans le logement 136 de l'élément de rotor 134 de la façon suivante. Le palier 152 est engagé dans le logement 136 depuis l'extérieur et prend appui sur la face latérale externe du rebord interne 156 du logement. La platine 144 est alignée sur l'axe D du logement puis est déplacée par translation le long de cet axe depuis l'extérieur, jusqu'à ce que son corps soit engagé dans le logement 136 et vienne en appui par son extrémité radialement externe sur le palier 152. Le second palier 154 est engagé dans le logement 136 depuis l'intérieur et prend appui sur la face latérale interne du rebord 156 du logement. Les secteurs de couronne 150 sont engagés les uns après les autres depuis l'intérieur dans le passage annulaire 182 s'étendant entre le corps de la platine 144 et une surface cylindrique interne 184 du logement 136 jusqu'à ce qu'ils soient situés au niveau de la gorge 162 de la platine. La surface 184 s'étend ici depuis le rebord interne 156 jusqu'à l'extrémité radialement interne du logement 136. Chaque secteur de couronne 150 est ensuite déplacé en translation radiale vers l'intérieur (par rapport à l'axe D) de façon à ce que son rebord interne 160 s'engage dans la gorge 162 et prenne appui sur le fond de cette gorge 162.

Le passage annulaire 182 précité a une dimension radiale F (par rapport à l'axe D) suffisante pour autoriser l'engagement de chaque secteur de couronne 150 par translation depuis l'intérieur le long de l'axe D. Cette dimension radiale F (figure 4) est notamment déterminée en fonction des diamètres interne et externe de la couronne et de l'étendue angulaire de ses secteurs. Par ailleurs, en position montée de la figure 4, un espace annulaire est nécessaire autour des secteurs de couronne 150 pour retirer le rebord annulaire 160 de la gorge 162 en déplaçant les secteurs de couronne en translation radiale par rapport à l'axe D vers l'extérieur. L'espace a une dimension radiale E par rapport à l'axe D (figure 5).

Dans un exemple particulier de réalisation de l'invention, la couronne 150 a un diamètre interne de 69mm (correspondant au diamètre interne de son rebord interne 160) et un diamètre externe de 74,5mm. Lorsque les secteurs de couronne ont chacun une étendue angulaire de 90°, la dimension radiale E de l'espace doit être de 7,5mm environ. Lorsque leur étendue angulaire est de 120°, cette dimension E est de 10mm environ, et lorsque leur étendue angulaire est de 180°, la dimension E est de 28mm environ.

En fonctionnement, les forces centrifuges auxquelles sont soumises les pales de l'hélice sont transmises à l'anneau polygonal 134 par l'intermédiaire des platines 144, des couronnes 150 ainsi que des paliers 154. La transmission des efforts entre les platines et les couronnes est assurée par appui de la paroi latérale radialement interne de la gorge 162 sur la face radialement interne du rebord 160 de la couronne (dans une direction parallèle à l'axe D), la gorge 162 et le rebord 160 étant conçus pour résister aux efforts précités.

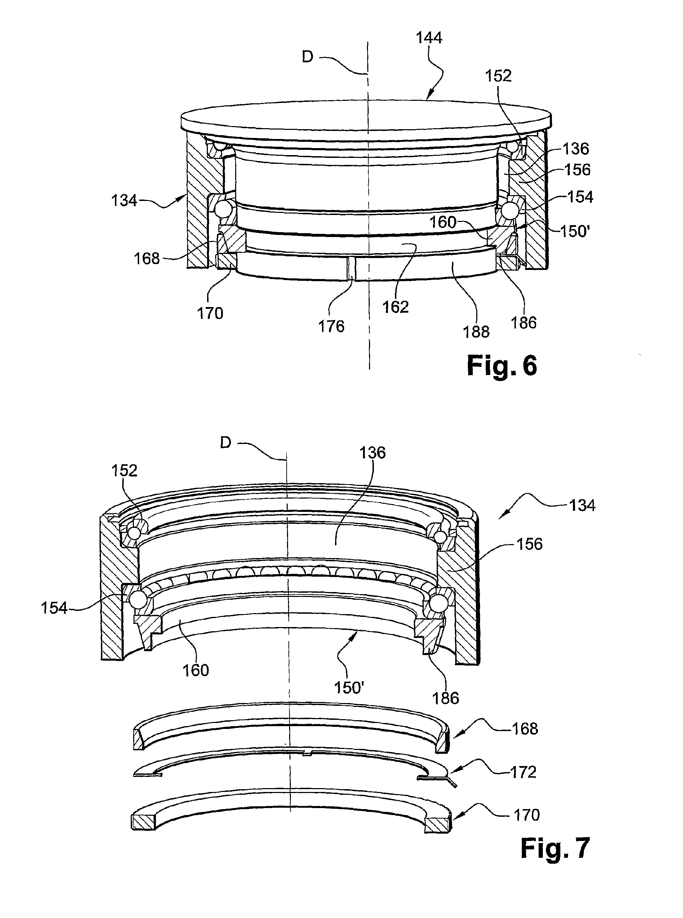

Dans le mode de réalisation préféré de l'invention représenté aux figures 6 et 7, seule la couronne 150 diffère de celle des figures 4 et 5, cette couronne comprenant en outre un rebord cylindrique 186 s'étendant vers l'intérieur le long de l'axe D. Ce rebord 186 est en appui par sa surface cylindrique interne sur une surface cylindrique externe 188 du corps de la platine qui s'étend entre la gorge 162 et l'extrémité radialement interne de ce corps. Cet appui permet de maintenir en position le rebord interne 160 de la couronne 150 dans la gorge 162 de la platine lorsque les efforts centrifuges appliqués à la pale son importants.

Dans encore une autre variante non représentée, le nombre des secteurs de couronne est égal à trois ou quatre, voire plus.

## Revendications

1. Procédé de montage d'une hélice non carénée à pales à calage variable pour une turbomachine, les pales de l'hélice étant montées à rotation autour de leurs axes dans des logements radiaux (136) d'un élément annulaire (134) de rotor, chaque pale étant portée par une platine (144) à corps cylindrique, **caractérisé en ce que** ledit corps cylindrique est engagé depuis l'extérieur dans un logement radial de l'élément de rotor et est retenu dans ce logement par une couronne annulaire (150), ladite couronne étant montée depuis l'intérieur dans le logement, après engagement du corps de la platine dans ledit logement, et étant appliquée sur un rebord interne du logement par l'intermédiaire d'un palier (154), la couronne étant sectorisée et comprenant une partie radialement interne (160) qui est engagée par emboîtement des secteurs de couronne dans une gorge annulaire (162) de la surface externe du corps de la platine.

2. Procédé selon la revendication 1, **caractérisée en ce que** la couronne (150) comprend deux secteurs qui ont chacun une étendue angulaire de 180° environ, ou trois secteurs qui ont chacun une étendue angulaire de 120° environ, ou quatre secteurs qui ont chacun une étendue angulaire de 90° environ.

3. Procédé selon l'une des revendications précédentes, **caractérisée en ce que** des moyens de blocage de la couronne (150) dans la gorge (162) du corps de la platine (144) sont fixés depuis l'intérieur du logement (136) sur le corps de la platine.

4. Procédé selon la revendication 3, **caractérisée en ce que** la couronne (150) comprend une surface externe tronconique (164) s'élargissant vers l'extérieur et sur laquelle est appliquée une surface interne tronconique (166) sensiblement complémentaire d'un anneau (168) qui est engagé depuis l'intérieur dans le logement (136) et qui est sollicité sur la couronne par un écrou (170) vissé sur le corps de la platine (144).

5. Procédé selon la revendication 4, **caractérisée en ce qu'**une rondelle de blocage (172) est intercalée entre l'anneau (168) et l'écrou (170) et comprend des premiers moyens (174) coopérant par liaison de formes avec des moyens (176) complémentaires du corps de la platine (144), et des seconds moyens (178) coopérant par liaison de formes avec des moyens (180) complémentaires de l'écrou, pour immobiliser en rotation l'écrou vis-à-vis de la platine.

6. Procédé selon la revendication 3, **caractérisée en ce que** la couronne comprend une surface externe tronconique s'élargissant vers l'extérieur et sur laquelle est appliquée une surface interne tronconique sensiblement complémentaire d'un anneau qui comprend un filetage interne de vissage sur le corps de la platine.

7. Procédé selon l'une des revendications précédentes, **caractérisée en ce que** la couronne (150) comprend un rebord cylindrique (186) s'étendant axialement vers l'intérieur par rapport à l'axe (D) du logement (136) et appliqué sur une surface cylindrique externe du corps de la platine.

8. Procédé selon l'une des revendications précédentes, **caractérisée en ce que**, en position montée, la couronne (150) est séparée d'une surface cylindrique interne du logement par un espace annulaire.

9. Procédé selon l'une des revendications précédentes, **caractérisée en ce que** le rebord interne (156) du logement de l'élément de rotor (134) comprend une face latérale interne et une face latérale externe, la couronne (150) étant appliquée sur la face latérale interne du rebord (156) par l'intermédiaire du palier (154) correspondant, la platine (144) étant appliquée sur la face latérale externe du rebord (156) par l'intermédiaire d'un autre palier (152).

## Patentansprüche

1. Verfahren zum Montieren eines nicht ummantelten Propellers mit Blättern mit veränderbarem Einstellwinkel bei einer Turbomaschine bzw. einem Turbotriebwerk, wobei die Blätter des Propellers um ihre Achsen drehbar in radialen Aufnahmeausnehmungen (136) eines ringförmigen Rotorteils (134) gelagert sind, wobei jedes Blatt von einer Platte (144) mit zylindrischem Körper getragen wird, **dadurch gekennzeichnet, dass** der zylindrische Körper von außen in eine radiale Aufnahmeausnehmung des Rotorteils eingreift und von einem Ringkranz (150) in dieser Aufnahmeausnehmung gehalten wird, wobei nach Eingreifen des Körpers der Platte in die Aufnahmeausnehmung der Kranz von innen in die Aufnahmeausnehmung montiert wird und über ein Lager (154) an eine innere Randleiste der Aufnahmeausnehmung angesetzt wird, wobei der Kranz unterteilt ausgeführt ist und einen radial inneren Abschnitt (160) aufweist, der durch Einstecken der Kranzsektoren in eine ringförmige Nut (162) der Außenfläche des Körpers der Platte eingreift.

2. Verfahren nach Anspruch 1, **dadurch gekennzeichnet, dass** der Kranz (150) zwei Sektoren aufweist, die jeweils eine Winkelerstreckung von etwa 180° aufweisen, oder drei Sektoren, die jeweils eine Winkelerstreckung von etwa 120° aufweisen, oder vier Sektoren, die jeweils eine Winkelerstreckung von etwa 90° aufweisen.

3. Verfahren nach einem der vorangehenden Ansprüche, **dadurch gekennzeichnet, dass** Mittel zum Sichern des Kranzes (150) in der Nut (162) des Körpers der Platte (144) von innerhalb der Aufnahmeausnehmung (136) an den Körper der Platte befestigt sind.

4. Verfahren nach Anspruch 3, **dadurch gekennzeichnet, dass** der Kranz (150) eine kegelstumpfförmige Außenfläche (164) aufweist, die sich nach außen erweitert und an welche eine kegelstumpfförmige Innenfläche (166) angesetzt ist, die im wesentlichen komplementär zu einem Ring (168) ausgeführt ist, welcher von innen in die Aufnahmeausnehmung (136) eingreift und über eine an den Körper der Platte (144) angeschraubte Mutter (170) an den Kranz gedrückt wird.

5. Verfahren nach Anspruch 4, **dadurch gekennzeichnet, dass** eine Sicherungsscheibe (172) zwischen Ring (168) und Mutter (170) eingefügt ist und erste Mittel (174), die durch Formschluss mit komplementären Mitteln (176) des Körpers der Platte (144) zusammenwirken, und zweite Mittel (178) aufweist, die durch Formschluss mit komplementären Mitteln (180) der Mutter zusammenwirken, um die Mutter gegenüber der Platte drehfest festzulegen.

6. Verfahren nach Anspruch 3, **dadurch gekennzeichnet, dass** der Kranz eine kegelstumpfförmige Außenfläche aufweist, die sich nach außen erweitert und an welche eine im Wesentlichen komplementäre kegelstumpfförmige Innenfläche eines Rings angesetzt ist, der ein Innengewinde zum Anschrauben an den Körper der Platte aufweist.

7. Verfahren nach einem der vorangehenden Ansprüche, **dadurch gekennzeichnet, dass** der Kranz (150) eine zylindrische Randleiste (186) aufweist, die sich gegenüber der Achse (D) der Aufnahmeausnehmung (136) axial nach innen erstreckt und an eine zylindrische Außenfläche des Körpers der Platte angesetzt ist.

8. Verfahren nach einem der vorangehenden Ansprüche, **dadurch gekennzeichnet, dass** in montierter Stellung der Kranz (150) durch einen ringförmigen Raum von einer zylindrischen Innenfläche der Aufnahmeausnehmung getrennt ist.

9. Verfahren nach einem der vorangehenden Ansprüche, **dadurch gekennzeichnet, dass** die innere Randleiste (156) der Aufnahmeausnehmung des Rotorteils (134) eine seitliche Innenfläche und eine seitliche Außenfläche aufweist, wobei der Kranz (150) über das entsprechende Lager (154) an die seitliche Innenfläche der Randleiste (156) angesetzt ist, wobei die Platte (144) über ein weiteres Lager (152) an die seitliche Außenfläche der Randleiste (156) angesetzt ist.

## Claims

1. A method for mounting an unducted fan having variable-pitch blades for a turbine engine, the blades of the fan being rotatably mounted about the axes thereof in radial recesses (136) of an annular rotor element (134) and each blade being supported by a plate (144) with a cylindrical body, **characterised in that** the cylindrical body is inserted from the outside into a radial recess of the rotor element and is held in this recess by an annular ring (150), said annular ring being mounted from the inside in the recess, after inserting the body of the plate in said recess, and being applied on an inner edge of the recess by means of a bearing (154), the ring being sectorized and comprising a radially inner portion (160) inserted via interlocking of the ring sectors into an annular groove (162) of the outer surface of the body of the plate.

2. The method according to claim 1, **characterised in that** the ring (150) comprises two sectors each having an angular extent of approximately 180°, or three sectors each having an angular extent of approximately 120°, or four sectors each having an angular extent of approximately 90°.

3. The method according to one of the preceding claims, **characterised in that** means of locking of the ring (150) in the groove (162) of the body of the plate (144) are fixed from the inside of the recess (136) onto the body of the plate.

4. The method according to claim 3, **characterised in that** the ring (150) comprises a tapered outer surface (164) that widens towards the exterior and whereon is applied a tapered inner surface (166) substantially complementary of a ring (168) which is inserted from the inside into the recess (136) and which is solicited on the ring by a nut (170) screwed onto the body of the plate (144).

5. The method according to claim 4, **characterised in that** a lock washer (172) is inserted between the ring (168) and the nut (170) and comprises first means (174) cooperating by shape coupling with means (176) complementary of the body of the plate (144), and second means (178) cooperating by shape coupling with means (180) complementary of the nut, in order to immobilise in rotation the nut with regards to the plate.

6. The method according to claim 3, **characterised in that** the ring comprises a tapered outer surface that widens towards the exterior and whereon is applied a tapered inner surface substantially complementary of a ring which comprises an internal thread screw on the body of the plate.

7. The method according to one of the preceding claims, **characterised in that** the ring (150) comprises a cylindrical edge (186) extending axially towards the interior in relation to the axis (D) of the recess (136) and applied onto an external cylindrical surface of the body of the plate.

8. The method according to one of the preceding claims, **characterised in that**, in mounted position, the ring (150) is separated from an inner cylindrical surface of the recess by an annular space.

9. The method according to one of the preceding claims, **characterised in that** the inner edge (156) of the recess of the rotor element (134) comprises an inner lateral face and an outer lateral face, the ring (150) being pressed against the inner lateral face of the edge (156) by means of the corresponding bearing (154), the plate (144) being applied against the outer lateral face of the edge (156) by means of another bearing (152).
